# DEMANDE DE BREVET EUROPEEN

(11) **EP 1 239 211 A1**
(43) Date de publication de la demande: **11.09.2002**
(21) Numéro de dépôt: 02356041.0
(22) Date de dépôt: 28.02.2002
(51) Int. Cl.: F16L 55/46, F16K 11/065

(54) **Vanne avec des moyens de nettoyage et compatible avec un racleur**

(30) Priorité: 08.03.2001 FR 0103177
(71) Demandeur: ABB Cellier SA, 73100 Aix Les Bains (FR)
(72) Inventeur: Mollard, Pascal, 73100 Aix Les Bains (FR)
(74) Mandataire: Palix, Stéphane

(57) **Abrégé**

Vanne de distribution (1) destinée à assurer la mise en connexion d'une première conduite dite "principale", et d'une seconde conduite dite "secondaire", comportant :
◆ des voies amont (3) et aval (4) reliées à la conduite principale de diamètres identiques;
◆ une troisième voie de raccordement (5) reliée à la conduite secondaire,
◆ un organe d'obturation (7) apte à se déplacer perpendiculairement à la conduite principale, entre deux positions, à savoir :
   ◆ une position fermée dans laquelle l'organe d'obturation (7) présente un premier orifice (15), de diamètre identique à celui des voies amont (3) et aval (4), positionné dans l'alignement desdites voies amont (3) et aval (4),
   ◆ une seconde position, dite position ouverte dans laquelle l'organe d'obturation (7) présente un second orifice (16) débouchant d'une part, en direction de la voie amont (3) et d'autre part, en direction de la troisième voie de raccordement (3), de manière à mettre en communication la voie amont et la conduite secondaire.
caractérisée en ce que le diamètre des voies amont (3) et aval (4) est choisi pour autoriser le passage d'un racleur (20), et en ce le second orifice (16) de l'organe d'obturation (7) possède des moyens (23) pour empêcher le racleur (20) issu de la voie amont (3) de pénétrer dans le second orifice (16).

## Description

### Domaine technique

L'invention se rattache au domaine des vannes utilisées dans des installations impliquant une distribution de fluides. Elle trouve une application particulière notamment dans les installations chimiques assurant le mélange de différents produits comme c'est le cas par exemple dans l'industrie des lubrifiants, l'industrie des peintures, ou dans les installations papetières. Elle concerne plus spécifiquement une vanne de distribution qui permet la mise en connexion de deux conduites, et qui présentent à la fois des propriétés d'étanchéité, tout en étant compatibles avec un nettoyage par la circulation d'un racleur.

### Techniques antérieures

De façon générale, les installations assurant la distribution des produits liquides comprennent différentes conduites ou tubulures à l'intérieur desquelles circulent le ou les produits distribués. En fonction des différentes destinations des produits, il peut être nécessaire de mettre en connexion certaines conduites avec certaines autres au moyen de vannes. Les vannes de distribution permettent donc d'assurer la connexion d'une première conduite avec une seconde.

Ainsi, de façon générale, ces vannes sont destinées à relier une première conduite dite "conduite principale" avec une seconde conduite dite "conduite secondaire", qui lui est généralement perpendiculaire. A la jonction entre la conduite principale et la conduite secondaire, la vanne comporte un organe mobile qui selon la position qu'il occupe assure la connexion ou non entre la conduite principale et la conduite secondaire. Un exemple d'une telle vanne est décrit dans le document US 3 068 901.

Lorsque les installations véhiculent des produits différents, il peut être important de se prémunir du risque de contamination d'un produit par des traces d'un produit ayant préalablement circulé dans une conduite. C'est pourquoi certaines conduites doivent être nettoyées après le passage d'un premier fluide. Pour faciliter ces opérations de nettoyage, et notamment les automatiser, on connaît l'utilisation de racleurs qui sont des éléments ayant un diamètre extérieur sensiblement égal au diamètre intérieur des conduites dans lesquelles ils circulent. Ces racleurs, lors de leur mouvement, entraînent les traces du liquide ou du fluide qui demeurent dans la conduite. Un exemple de l'utilisation d'un racleur dans une vanne est décrit dans le document US 3 063 079.

Un premier problème que se propose donc de résoudre l'invention est celui de fournir une vanne qui soit compatible avec le passage d'un racleur de nettoyage.

Pour mettre en communication différentes conduites au moyen de vannes de distribution, plusieurs solutions ont déjà été proposées.

Ainsi, on connaît les vannes dites "à anneaux", dans lesquelles l'organe mobile situé dans la vanne est apte à se déplacer perpendiculairement à la conduite principale. Cet organe mobile possède une portion formant un orifice traversant qui présente un diamètre identique à celui de la conduite principale. De la sorte, cet orifice peut être traversé par un racleur circulant dans la conduite principale. Lorsque l'organe mobile est déplacé, il occupe une position dans laquelle il est situé en partie au milieu de la conduite principale, libérant ainsi le passage entre la conduite principale et la conduite secondaire. Ce genre de vanne présente donc l'avantage de bloquer la circulation du racleur lorsque la vanne est ouverte, c'est-à-dire lorsque la circulation du fluide est possible depuis la conduite principale vers la conduite secondaire.

En revanche, ce type de vannes présente l'inconvénient majeur de ne pas assurer une étanchéité entre la voie amont et la voie aval de la conduite principale lorsque la vanne est ouverte.

Un premier problème que se propose de résoudre l'invention est celui de l'étanchéité entre les voies amont et aval de la conduite principale lorsque la vanne est ouverte.

On connaît également un autre type de vanne de distribution communément appelée "vanne à boule". Dans ce genre de vanne, l'organe mobile est une sphère qui est percée d'un orifice traversant destiné à mettre en communication les voies de la vanne qui se trouvent de part et d'autre de cet orifice. Des exemples de ce type de vannes sont décrits dans les document US 5 113 895 et EP 0 563 853.

Une telle vanne présente l'inconvénient majeur d'être mécaniquement complexe, puisqu'elle nécessite un usinage précis de l'élément mobile sphérique, qui augmente fortement le prix de revient d'une telle vanne.

On connaît d'autres vannes de distribution généralement dénommées "vannes papillon" telle que notamment celle décrite dans le document US 5 193 572. L'organe mobile d'une telle vanne obture le passage entre la conduite principale et la conduite secondaire. Lors de son mouvement, l'organe mobile pénètre en partie à l'intérieur de la conduite principale, et constitue dans cette position un obstacle au racleur, évitant ainsi que ce dernier ne se déplace de façon inopinée dans l'installation. Ce type de vanne présente également l'inconvénient majeur de conserver une connexion entre les voies amont et aval de la conduite principale dans les deux positions de l'organe mobile.

L'objectif de l'invention est de fournir une vanne qui permette le passage d'un racleur à l'intérieur de la conduite principale, tout en assurant une étanchéité optimale entre la conduite principale et la conduite secondaire lorsque cela est nécessaire, ou bien encore en étanchéité entre les voies amont et aval de la conduite principale.

### Exposé de l'invention

L'invention concerne donc une vanne de distribution destinée à assurer la mise en connexion d'une première conduite dite principale et d'une seconde conduite dite secondaire. Cette vanne comporte de façon connue, des voies amont et aval de diamètres identiques, reliées à la conduite principale, ainsi qu'une troisième voie de raccordement reliée à la conduite secondaire..

Cette vanne comporte également un organe d'obturation, apte à se déplacer perpendiculairement à la conduite principale, entre deux positions, à savoir :
◆ une première position, dite position fermée dans laquelle l'organe d'obturation présente un premier orifice, de diamètre identique à celui des voies amont et aval, positionné dans l'alignement desdites voies amont et aval, de manière à autoriser le passage de fluide dans la conduite principale ;
◆ une seconde position, dite position ouverte dans laquelle l'organe d'obturation présente un second orifice débouchant d'une part, en direction de la voie amont, et d'autre part, en direction de la troisième voie de raccordement, de manière à mettre en communication la voie amont et la conduite secondaire.

Conformément à l'invention, cette vanne se caractérise en ce que le diamètre des voies amont et aval est choisi pour autoriser le passage d'un racleur, et que le second orifice de l'organe d'obturation possède des moyens pour empêcher le racleur issu de la voie amont de pénétrer dans le second orifice de l'organe d'obturation.

Autrement dit, l'organe d'obturation possède un orifice traversant dont le diamètre intérieur correspond à celui de la conduite principale. Lorsque cet orifice traversant se trouve en regard des voies amont et aval, la continuité de la conduite principale est assurée avec un diamètre constant sur toute la traversée de la vanne. Le passage du racleur est alors possible, et ce dernier peut agir efficacement sur toute la longueur de la conduite principale, et notamment au niveau de la vanne.

Lorsque l'organe d'obturation se déplace, la communication est coupée entre la voie aval et la conduite secondaire, alors qu'elle est établie entre la voie amont et la conduite secondaire, ce qui permet l'écoulement du fluide depuis la conduite principale jusqu'à la conduite secondaire. Dans cette configuration, le racleur est bloqué dans sa progression à l'intérieur de la voie amont de sorte qu'il ne gêne pas le mouvement de l'organe d'obturation lorsque la vanne passe de la position ouverte à la position fermée.

Avantageusement en pratique, la vanne comporte des moyens d'étanchéité disposés à la fois entre la voie amont et l'organe d'obturation, et entre la voie aval et l'organe d'obturation. Ces moyens d'étanchéité permettent donc d'assurer l'étanchéité entre les conduites primaire et secondaire dans les deux positions de l'organe d'obturation.

Autrement dit, lorsque la vanne est fermée, l'étanchéité est assurée entre la conduite principale et la conduite secondaire, de sorte qu'aucun fluide ne peut passer de la conduite principale vers la conduite secondaire. Lorsque la vanne est en position ouverte, l'étanchéité est assurée entre la voie aval et la voie amont ainsi que la troisième voie de raccordement qui lui est connectée. De la sorte, le fluide en provenance de la conduite principale par la voie amont est intégralement acheminé dans la conduite secondaire sans aucun risque de la voir continuer son trajet dans la conduite principale par la voie aval.

Avantageusement en pratique, l'organe d'obturation possède deux faces planes dans ces zones venant en regard des voies amont et aval. De la sorte, les moyens d'étanchéité disposés entre les voies amont et aval, et l'organe d'obturation sont de géométrie plane, donc de conception classique. Ils sont également plus faciles à disposer.

Dans une forme préférée, ces moyens d'étanchéité peuvent être constitués par des joints toriques, dont le centre est situé sur l'axe de la voie principale.

Avantageusement en pratique, la vanne conforme à l'invention peut comporter au moins une buse de rinçage située dans la troisième voie de raccordement, cette buse étant apte à asperger la zone de jonction entre la troisième voie de raccordement et la conduite principale. De la sorte, il est possible de nettoyer la zone de la vanne qui n'est pas accessible par le racleur, et d'éviter ainsi tout risque de contamination ou de pollution des produits successifs amenés à circuler à travers la vanne caractéristique.

Dans une forme préférée, une de ces buses de rinçage peut être dirigée dans la position qu'occupe le racleur lorsque ce dernier vient au contact des moyens l'empêchant de pénétrer dans le second orifice de l'organe d'obturation. De la sorte, on parvient à nettoyer non seulement le corps de la vanne et l'organe d'obturation, mais également le racleur qui vient au contact de cet organe d'obturation lorsque la vanne est ouverte.

En pratique, le déplacement de l'organe d'obturation peut être assuré par un grand nombre d'actionneurs isolés du corps de la vanne tels que notamment des actionneurs manuels, ou des vérins pneumatiques, ou encore électriques.

### Description sommaire des figures

La manière de réaliser l'invention ainsi que les avantages qui en découlent ressortiront bien de la description du mode de réalisation qui suit, à l'appui des figures annexées dans lesquelles :
La figure 1 est une vue en coupe transversale d'une vanne conforme à l'invention, montrée dans sa position fermée.
La figure 2 est une vue en coupe selon le plan II-II' de la figure 1.
La figure 3 est une vue en coupe selon le plan III-III' de la figure 1.
La figure 4 en coupe transversale d'une vanne conforme à l'invention, montrée dans sa position ouverte.
La figure 5 est une vue en coupe selon le plan V-V' de la figure 4.

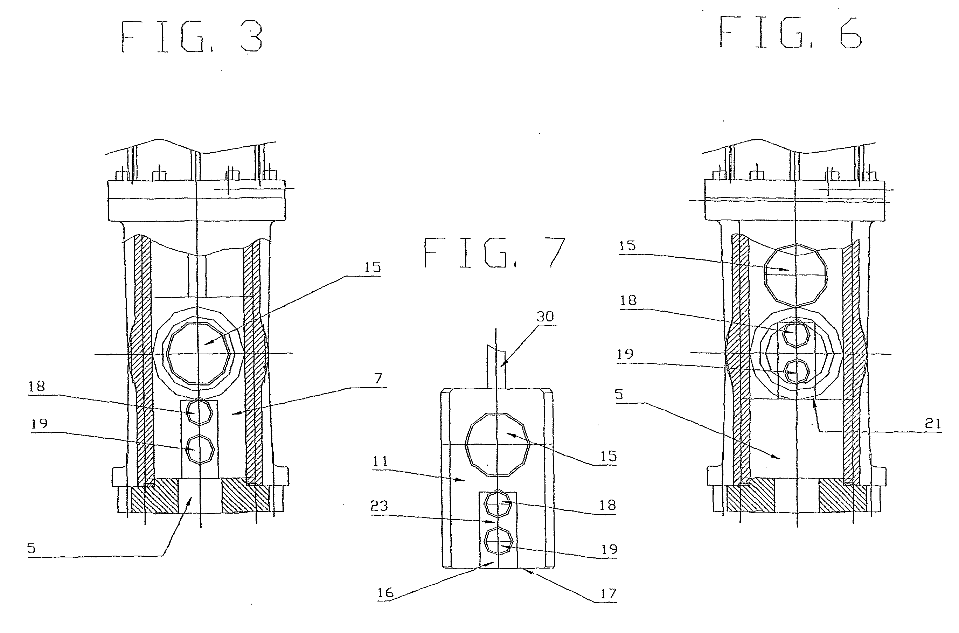

La figure 6 est une vue en coupe selon le plan VI-VI" de la figure 4.
La figure 7 est une vue selon le plan III-III' de la figure 1 , montrant l'organe obturateur seul.

### Manière de réaliser l'invention

Comme déjà évoqué, l'invention concerne une vanne de distribution qui peut être nettoyée par le passage d'un racleur, et qui possède d'excellentes propriétés d'étanchéité dans ses différentes positions.

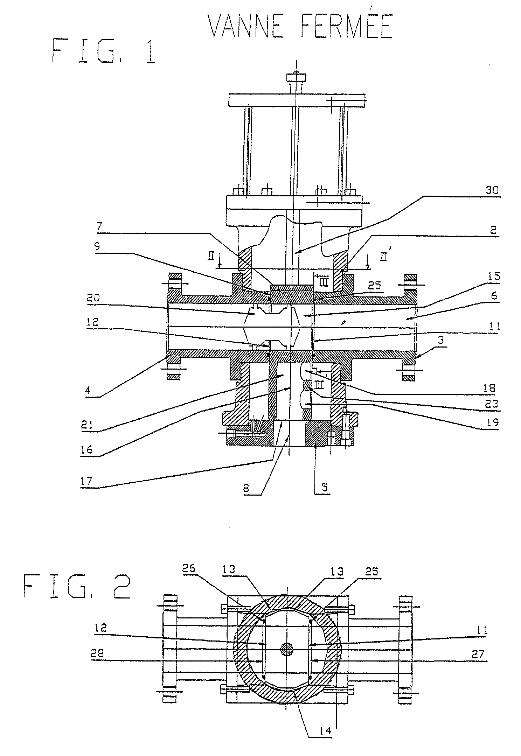

Précisément, et comme illustré à la figure 1, une telle vanne (1) comprend un corps de vanne (2), et différentes voies de raccordement. Plus précisément, la vanne (1) comprend une voie amont (3) et une voie aval (4), situées dans le prolongement l'une de l'autre, et destinée à être raccordée à une conduite principale non représentée. Le fluide circulant dans la conduite principale s'écoule de la voie amont (3) vers la voie aval (4). La vanne (1) comporte également une troisième voie de raccordement (5) destinée à être raccordée à une conduite secondaire non représentée. La troisième voie de raccordement (5) est disposée de façon perpendiculaire à l'axe (6) de la conduite principale.

Selon une caractéristique de l'invention, la vanne (1) comporte également un organe d'obturation mobile (7), apte à se déplacer perpendiculairement à la conduite principale, et dans la direction (8) de la conduite secondaire. Cet organe d'obturation (7) est monté coulissant à l'intérieur d'un logement (9) prévu à cet effet entre les voies amont et aval.

Dans la forme illustrée à la figure 1, les faces (11, 12) de l'organe d'obturation (7) qui sont orientées en direction des voies amont (3) et aval (4) sont planes. Les faces latérales (13, 14) reliant ces faces planes (11, 12) sont cylindriques, et de diamètre sensiblement égal au diamètre intérieur de la troisième voie (5) de raccordement, aux jeux mécaniques près.

Conformément à l'invention, l'organe d'obturation (7) possède deux orifices traversant distincts (15, 16). Le premier orifice (15) situé en partie haute de l'organe d'obturation (7) possède un profil cylindrique, de diamètre égal à celui des voies amont (3) et aval (4) de la conduite principale. De la sorte, et comme illustré à la figure 1, lorsque la vanne est dans la position dite "fermée", la conduite principale possède un diamètre constant à l'intérieur de la vanne, ce qui autorise le passage d'un racleur de nettoyage (20).

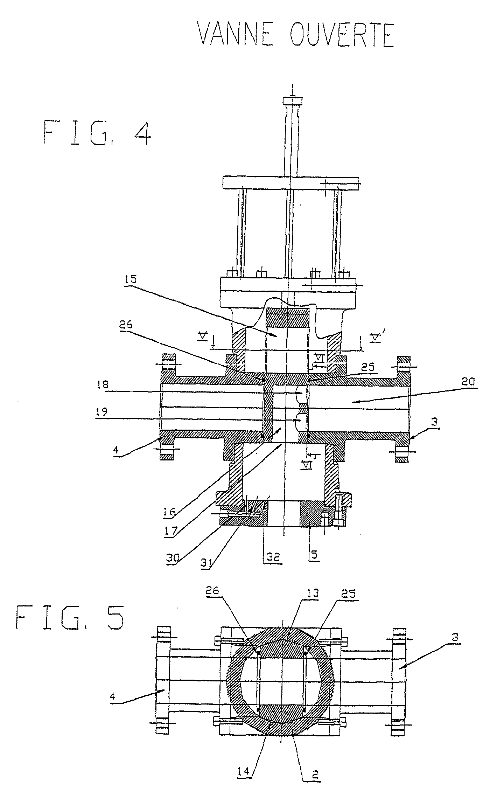

L'organe d'obturation (7) possède également un second orifice (16) traversant situé en partie basse. Ce second orifice (16) débouche dans la partie basse (17) de l'organe d'obturation en direction de la troisième voie (5) de raccordement. Cet orifice débouche également du côté de la voie amont (3). Il possède à cet effet deux trous percés (18, 19) sur la face plane (11) de l'organe d'obturation, ces trous (18, 19) débouchant à l'intérieur d'une cavité (21) en relation avec la sortie (17) de l'orifice. La présence des trous traversants (18, 19) permet de définir une portion affleurante (23) sur la surface (11) en regard de la voie amont (3). Comme illustré à la figure 4, cette portion (23) vient bloquer le racleur (20) qui se trouve situé dans la voie amont (3) en lui interdisant de pénétrer dans le second orifice (16).

La vanne (2) conforme à l'invention n'est pas limitée à cette seule géométrie utilisant deux trous traversants pour pénétrer dans le second orifice mais elle couvre également toutes les variantes dans lesquelles la face de l'organe d'obturation en regard de la voie amont possède une portion bloquant la progression du racleur.

Conformément à l'invention, les extrémités des voies amont (3) et aval (4) venant en regard de l'organe d'obturation (7) sont équipées de moyens d'étanchéité (25, 26). Plus précisément, les extrémités des voies amont et aval possèdent un logement cylindrique (27, 28) à l'intérieur duquel est mis en place un joint torique (25, 26). Bien entendu, l'invention n'est pas limitée à cette seule forme de joint torique, mais couvre d'autres variantes qui permettent d'assurer l'étanchéité entre l'organe d'obturation et les voies amont et aval, ces joints pouvant être un siège en polytétrafluoroéthylène, un joint gonflable ou analogue.

Le déplacement de l'organe d'obturation (7) peut être obtenu par différents moyens. Dans la forme illustrée aux figures 1 et 3, l'organe d'obturation (7) est relié par une tige (30) à un bras qui peut être relié à différents mécanismes d'actionnement. Il peut s'agir de vérins hydrauliques, pneumatiques. Il peut s'agir d'actionneurs électriques ou bien encore d'un actionnement manuel.

En fonctionnement, lorsque l'organe d'obturation (7) est en position basse, correspondant à une position de la vanne fermée, et comme illustrée à la figure 1, le premier orifice (15) de l'organe d'obturation (7) se trouve dans l'alignement des voies amont (3) et aval (4) de sorte que le fluide et un racleur (20) peuvent circuler à l'intérieur de la conduite principale.

L'étanchéité entre la voie principale et la voie secondaire est assurée par les deux joints toriques (25, 26) qui empêchent toute pénétration de fluide en direction de la troisième voie (5) de raccordement.

Lorsque l'organe d'obturation (7) est déplacé, elle se retrouve dans la position illustrée à la figure 4. Le premier orifice (15) se trouve dissimulé à l'intérieur du corps (2) de la vanne. Le second orifice (16) met alors en communication la voie amont (3) et la troisième voie de raccordement (5) par l'intermédiaire des trous traversants (18, 19). Dans ce cas, le joint torique (26) situé entre l'organe d'obturation (7) et la voie aval (4) assure l'étanchéité entre la partie amont de la conduite principale la partie aval de la conduite principale.

Le joint torique situé entre la voie amont (3) et l'organe d'obturation (7) empêche les fuites en direction de l'extérieur, et notamment dans la partie haute du corps (2) de la vanne. Comme déjà évoqué, la présence de la portion centrale (18) de l'organe d'obturation (7) bloque la progression du racleur (20) et empêche donc la pénétration de ce dernier à l'intérieur du second orifice (16), ce qui élimine les risques de voir le racleur (20) s'opposer aux mouvements de l'organe d'obturation (7).

Conformément à une autre caractéristique de l'invention, la troisième voie de raccordement (5) est équipée de différentes buses de nettoyage (30-32). Ces buses sont alimentées par une canalisation extérieurement non représentée. Deux de ces buses (30, 32) sont orientées de manière à asperger l'intérieur du corps de la troisième voie (5). La buse centrale (31) est dirigée de telle sorte qu'elle permet l'aspersion du second orifice (16) de l'organe d'obturation (7). Son orientation permet également au jet de nettoyage (18) de passer par un des trous traversants du second orifice (16) de manière à venir nettoyer la partie avant du racleur (20).

Il ressort de ce qui précède que la vanne conforme à l'invention présente de multiples avantages et notamment celui d'assurer une étanchéité optimale entre la voie principale et la voie secondaire, tout au autorisant le passage d'un racleur de nettoyage.

## Revendications

1. Vanne de distribution (1) destinée à assurer la mise en connexion d'une première conduite dite "principale", et d'une seconde conduite dite "secondaire", comportant :
◆ des voies amont (3) et aval (4) reliées à la conduite principale de diamètres identiques;
◆ une troisième voie de raccordement (5) reliée à la conduite secondaire,
◆ un organe d'obturation (7) apte à se déplacer perpendiculairement à la conduite principale, entre deux positions, à savoir:
◆ une première position, dite position fermée dans laquelle l'organe d'obturation (7) présente un premier orifice (15), de diamètre identique à celui des voies amont (3) et aval (4), positionné dans l'alignement desdites voies amont (3) et aval (4), de manière à autoriser le passage de fluide dans la conduite principale ;
◆ une seconde position, dite position ouverte dans laquelle l'organe d'obturation (7) présente un second orifice (16) débouchant d'une part, en direction de la voie amont (3) et d'autre part, en direction de la troisième voie de raccordement (3), de manière à mettre en communication la voie amont et la conduite secondaire.
**caractérisée en ce que** le diamètre des voies amont (3) et aval (4) est choisi pour autoriser le passage d'un racleur (20), et en ce le second orifice (16) de l'organe d'obturation (7) possède des moyens (23) pour empêcher le racleur (20) issu de la voie amont (3) de pénétrer dans le second orifice (16).

2. Vanne selon la revendication 1, **caractérisée en ce qu'**elle comporte des moyens d'étanchéité (25, 26) disposés :
◆ entre la voie amont (3) et l'organe d'obturation (7) ;
◆ entre la voie aval (4) et l'organe d'obturation (7),
permettant d'assurer l'étanchéité entre les conduites primaire et secondaire dans les deux positions de l'organe d'obturation (7).

3. Vanne selon la revendication 1, **caractérisée en ce que** l'organe d'obturation (7) possède deux faces planes (11, 12) dans les zones venant en regard des voies amont (3) et aval (4).

4. Vanne selon la revendication 2, **caractérisée en ce que** les moyens d'étanchéité sont des joints toriques (25, 26)

5. Vanne selon la revendication 1, **caractérisée en ce qu'**elle comporte au moins une buse de rinçage (30-32) située dans la troisième voie de raccordement (5), et apte à asperger la zone de jonction entre la troisième voie (5) et la conduite principale.

6. Vanne selon les revendications 4 et 5, **caractérisée en ce qu'**une des buses (31) est dirigée dans la position qu'occupe le racleur (20) lorsque ce dernier vient au contact des moyens (23) l'empêchant de pénétrer dans le second orifice (16).

7. Vanne selon la revendication 1, **caractérisée en ce que** le déplacement de l'organe d'obturation est assuré par un actionneur isolé du corps de la vanne.
